# EUROPÄISCHE PATENTSCHRIFT

(11) **EP 2 733 264 B1**
(45) Veröffentlichungstag und Bekanntmachung des Hinweises auf die Patenterteilung: **02.09.2015**
(21) Anmeldenummer: 13193035.6
(22) Anmeldetag: 15.11.2013
(51) Int. Cl.: A01G 13/00, E02D 17/20

(54) **Verfahren und Vorrichtung zur Erhöhung der Stabilität von Bodenmassen**
Method and device to increase the stability of slopes
Méthode et dispositif de renforcement des talus

(30) Priorität: 15.11.2012 DE 102012111002
(43) Veröffentlichungstag der Anmeldung: 21.05.2014
(73) Patentinhaber: Jähne GmbH für Produktinnovationen, 01187 Dresden (DE)
(72) Erfinder: Jähne, Benjamin, 01156 Dresden (DE); Lehnert, Michael, 01189 Dresden (DE)
(74) Vertreter: Riechelmann & Carlsohn Patentanwälte

(56) Entgegenhaltungen:
- JP-A- 2001 090 080
- JP-A- 2003 268 774

## Beschreibung

Die Erfindung betrifft ein Verfahren zur Erhöhung der Stabilität von Bodenmassen. Sie betrifft ferner Verfestigungselemente, die zur Erhöhung der Stabilität von Bodenmassen eingesetzt werden können.

Aus DE 10 2007 061 621 A1 ist ein Verfahren zur Erhöhung der Stabilität von geschütteten oder natürlich anstehenden Bodenmassen bekannt, bei dem Pflanzen als Verfestigungselemente eingesetzt werden. Die vertikal ausgerichteten Pflanzen werden in flächigen horizontalen Rastern angeordnet und sollen Wurzeln bilden, die eine Verfestigung des Bodens bewirken sollen. Zum Einbringen der Pflanzen in den Boden sollen Bohrlöcher in den Boden eingebracht werden. Alternativ können die Pflanzen in den Boden eingespült werden.

Ein weiteres Verfahren zur Befestigung von Hängen ist aus DE 44 24 212 A1 bekannt. Bei diesem Verfahren werden die erforderlichen Eigenschaften der Pflanzen und ihr Standort am zu befestigenden Hang mittels eines Rechenverfahrens bestimmt. Die Anwendung des Rechenverfahrens soll es erlauben, den Mindestdurchmesser, die Länge und das Rastermaß der Pflanzen zu ermitteln, die in den Boden eingebracht werden sollen. Diese Pflanzen sollen dann "sofort" eine Hangbefestigung bewirken. Die Wurzelbildung der Pflanzen ist dann nur noch ein Nebeneffekt, der für die Hangbefestigung nicht mehr erforderlich ist, sondern nur noch die Pflanzen am Leben erhalten soll. Pflanzen, die nicht anwachsen, müssen ersetzt werden.

In beiden Verfahren zur Hangbefestigung werden hohe Anforderungen an die einzubringenden Pflanzen gestellt. In beiden Fällen müssen Pflanzen ausgewählt werden, die unmittelbar nach Einbringung in den Boden eine ausreichende Stabilisierung des Bodens bewirken. Benötigt werden damit Pflanzen, die bereits in der Lage sind, eine Stabilisierung zu bewirken, in der Regel also solche, die bereits mehrere Jahre alt sind und somit eine berechnete Länge aufweisen.

Will man sich nicht auf die sofortige stabilisierende Wirkung der Pflanzen verlassen oder sollen, beispielsweise aus Kostengründen, Pflanzen verwendet werden, die für sich keine oder noch keine stabilisierende Wirkungen haben, wird in der Regel auf Matten, beispielsweise Geotextilien, zurückgegriffen.

Ganz ohne Pflanzen kommt zunächst der in DE 44 22 337 B1 beschriebene Formkörper aus, der band-, gitter- oder mattenförmig ausgebildet ist und mittels Holzpfählen an der Bodenoberfläche befestigt wird. Zwischen die Bänder oder in die Öffnungen der Gitter oder Matten können Pflanzen in den Boden gesetzt werden, die die Stützfunktion der Formkörper im Laufe der Zeit übernehmen können. Die Formkörper bestehen aus einem biologisch abbaubaren Kunststoff, so dass nicht nur die Holzpfähle, sondern auch die Formkörper jedenfalls dann verrotten können, wenn die Pflanzen für eine Stabilisierung der Bodenmassen sorgen. Bis die Wurzeln der Pflanzen allerdings die Tiefe erreicht haben, die für eine Stabilisierung der Bodenmassen erforderlich ist, kann eine erhebliche Zeit vergehen.

In EP 0 857 415 A1 wird ein Verfahren beschrieben, das das Wachstum von Pflanzen an Hängen fördern soll. Dazu wird ein einzelner "Sandsack" verwendet, der aus einem flexiblen Material besteht und mehrere Kammern aufweist. Der Sandsack wird auf eine horizontale Ebene gelegt. Anschließend wird Erde in die Kammern des Sandsackes eingefüllt. In diese Erde können dann die Bäume eingesetzt werden. Schließlich werden der Sandsack, Erde und Pflanzen mit einem Kran auf die Böschung flächendeckend aufgelegt. Auf dem Hang wird der Sandsack dann mit einem Zaun fixiert, der über Anker in dem Erdreich befestigt wird. Das Gewicht des Sandsackes und des verankerten Zauns könnten für eine oberflächliche Stabilisierung des Hanges sorgen. Gleichzeitig sorgt die Erde in dem Sandsack für anfänglich gute Wachstumsbedingungen der Pflanzen, jedenfalls solange bis die Wurzeln den Sandsack an dessen Unterseite durchstoßen und versuchen in den darunter liegenden Boden einzutreten.

Aus DE 298 06 806 U1 ist eine Vorrichtung zum Begrünen von Flächen bekannt, die Gras oder Grassamen zusammen mit einem Substrat enthalten kann. Die Vorrichtung weist in ihrem Mantel Austrittsöffnungen für die Graswurzeln auf. Dabei sind in einem Mittelbereich lange Austrittsöffnungen vorgesehen, während in einem oberen Bereich kurze Austrittsöffnungen vorgesehen sind. Das Substrat nimmt den gesamten Mittelbereich ein. Auf das Substrat wird der Grassamen aufgebracht, so dass sich der Grassamen nur im Bereich der kurzen Austrittsöffnungen befindet. Am unteren Ende, dem Setzende der Vorrichtung können senkrechte Rippen ausgebildet sein. Die Rippen sollen Widerhakenelemente bilden, die ein Herausziehen der Vorrichtung aus dem Boden verhindern sollen. Um die Vorrichtung in den Boden einbringen zu können, ist es allerdings erforderlich, das Setzende nach Art einer Pfeilspitze auszubilden. Die in DE 298 06 806 U1 beschriebene Vorrichtung ist zum Begrünen von Böschungen geeignet, aber nicht zu deren Befestigung, weil es nicht oder nur schwer möglich ist, die Vorrichtung in große Tiefen eines Erdbauwerkes einzubringen.

JP 09233958 A offenbart einen Behälter, der ein zylinderförmiges Oberteil und ein kegelförmiges Unterteil aufweist, das als Pfeilspitze im Sinne von DE 298 06 806 U1 angesehen werden kann. Im Mantel des Behälters befinden sich Öffnungen, die einen Wasserdurchtritt gestatten sollen. An der Mantelaußenseite ist ein helikaler Überstand oder eine Vertiefung ausgebildet, die ein Einschrauben der Behälter in das Erdreich ermöglichen sollen. Weitere Verfestigungselemente sind von JP2001090080 A bekannt. Aufgabe der Erfindung ist es, die Nachteile nach dem Stand der Technik zu beseitigen. Es soll insbesondere ein Verfahren zur Erhöhung der Stabilität von Bodenmassen angegeben werden, mit dem eine sofortige und sich in große Tiefen erstreckende stabilisierende Wirkung erreicht werden kann, ohne dass es erforderlich ist, weitgehend ausgewachsene Pflanzen zu verwenden. Ferner sollen dafür geeignete Verfestigungselemente angegeben werden.

Diese Aufgabe wird durch die Merkmale der Ansprüche 1, 9 und 13 gelöst. Zweckmäßige Ausgestaltungen der Erfindungen ergeben sich aus den Merkmalen der Unteransprüche.

Nach Maßgabe der Erfindung ist ein Verfahren zur Befestigung von natürlich anstehenden oder geschütteten Bodenmassen vorgesehen, die durch Einführung von Verfestigungselementen, die sich in große Tiefen erstrecken, an einer Lageveränderung gehindert werden, wobei die Verfestigungselemente jeweils ein Formteil, das ganz oder teilweise aus einem biologisch abbaubaubaren, formstabilen Kunststoff gebildet ist und das sich von der Oberfläche der Bodenmassen in die großen Tiefen erstreckt, und eine wurzelbildende Pflanze umfassen und wobei in dem Formteil ein Innenraum ausgebildet ist, der an der Oberseite des Formteils offen ist und durch den der Hauptspross der wurzelbildenden Pflanze verläuft.

Im Gegensatz zum Stand der Technik weisen die Verfestigungselemente jeweils ein Formteil, das aus einem biologisch abbaubaren Kunststoff besteht, und eine wurzelbildende Pflanze auf, die zunächst von dem Formteil gehalten wird. Der Vorteil des Verfahrens besteht insbesondere darin, dass die Formteile anfänglich alleine für eine Stabilisierung der Bodenmasse sorgen können, diese Funktion aber mit der Zeit von den Pflanzen übernommen wird. Die Pflanzen, vorzugsweise Bäume, die im Vergleich zum Stand der Technik wesentlich jünger sein können, werden anfänglich von den Formteilen gehalten und von ihnen geschützt. Das Wachstum der Wurzeln, die aus dem Innenraum des Formteils in dessen Umgebung austreten können, sorgt dafür, dass die Pflanzen die stabilisierende Wirkung der Formteile übernehmen können. Da die Formteile aus einem biologisch abbaubaren Kunststoff bestehen, werden die Formteile proportional zum Wachstum der Pflanze abgebaut, so dass sie deren Wachstum nicht behindern. In einer bevorzugten Ausführungsform des erfindungsgemäßen Verfahrens ist daher vorgesehen, dass der Abbauprozess des Kunststoffes des Formteils proportional zur Durchwurzelung der Bodenmasse durch Ausbildung von Wurzeln, die, vom Hauptspross der wurzelbildenden Pflanzen ausgehend, sich von dem Innenraum des Formteils in die Bodenmassen erstrecken, verläuft. Vorteilhafterweise beginnt der Abbauprozess jedoch versetzt zur Durchwurzelung, beispielsweise mit einem Versatz von wenigstens zwei Jahren.

Zur Förderung des Wachstums der Pflanze kann der biologisch abbaubare Kunststoff Nährstoffe enthalten, die während des Abbaus des Kunststoffes freigesetzt werden. Überdies stellen die Formteile einen Schutz für die in ihnen enthaltene Pflanze dar. Insbesondere bei der Einbringung der Verfestigungselemente wären die Pflanzen einer starken Belastung ausgesetzt, die zur Vernichtung von Wurzeln und damit zur Verringerung der Anwachswahrscheinlichkeit führen würde. Außerdem verhindern die Formteile, dass Drücke, die aus Verschiebungen der Bodenmasse, insbesondere auch beim Einbringen der Verfestigungselemente resultieren, unmittelbar auf die Pflanze einwirken können, was ebenso zu einer Beeinträchtigung der Anwachswahrscheinlichkeit führen kann. Neben der Pflanze kann der Innenraum ein nährstoffhaltiges Gemisch, beispielsweise Erde oder Humus enthalten, dass das Wachstum der Pflanze fördert. Damit liegt ein besonderer Vorteil der Erfindung darin, dass die Formteile sowohl für eine Tiefenstabilisierung der Bodenmasse als auch für eine Stabilisierung der Pflanze in der Bodenmasse sorgen. Zur weiteren Verbesserung der Tiefenstabilisierung können an der Unterseite der Formteile Anker ausgebildet sein, beispielsweise ein oder mehrere Streben, die von der Unterseite des Formteils abstehen und so eine Verschiebung des Formteils und damit des Verfestigungselementes insgesamt erschweren.

Unter der Erhöhung der Stabilität einer Bodenmasse wird hier insbesondere die Erhöhung der Lagesicherheit der Bodenmasse verstanden. Damit ist auch eine Befestigung der Bodenmasse verbunden, die eine Erosion oder Rutschung von Bodenteilen verhindert. Das erfindungsgemäße Verfahren ist insbesondere zur Sicherung von Böschungen und Hängen, beispielsweise an Straßen, Schienen und Gärten, zur Sicherung von Ufern, beispielsweise an Flüssen und Seen, zur Sicherung von Deichen, als Pflanzenstütz- und/oder -wurzelhilfe sowie zur Riffbildung geeignet.

Die Formteile sind an ihrer Oberseite offen und weisen jeweils einen Innenraum auf. In diesen Innenraum kann der Wurzelballen der Pflanze eingebracht werden, der dann an der Unterseite des Formteils im Innenraum gehalten wird. Von dort kann sich der Hauptspross der Pflanze bis zur Oberseite des Formteils erstrecken und dort aus dem Formteil austreten und sich über die Oberfläche der Bodenmasse erheben. Da sich das Formteil erfindungsgemäß in große Tiefen erstreckt, wird so sichergestellt, dass die Wurzelballen in großen Tiefen eingebracht werden. Die Öffnung an der Oberseite erstreckt sich zweckmäßigerweise über die gesamte Oberseite, so dass keine Querschnittsverengungen zwischen dem Innenraum und der Öffnung an der Oberseite ausgebildet sind.

Schließlich stellt das Formteil einen Fraßschutz für die Pflanze dar. Alles in allem stellt das Formteil optimale Wachstumsbedingungen für die Pflanze sicher. Die Formteile sorgen dafür, dass die Pflanze Bedingungen vorfindet, die optimal auf ihre Bedürfnisse abgestimmt sind. Der Einsatz der Formteile imitiert natürliche Strukturen, die in der Bodenmasse noch nicht zu finden sind, mit den Formteilen aber hergestellt werden können.

Damit wird der Anteil von Pflanzen, die ausfallen, beispielsweise weil sie nicht anwachsen, erheblich gesenkt.

Unter großen Tiefen werden hier insbesondere Tiefen von 0,5 bis 8 m, ausgehend von der Oberfläche der Bodenmasse, verstanden. Der Abstand zwischen benachbarten Verfestigungselementen kann zwischen 0,5 und 3 m liegen. Zur Bestimmung der Anordnung und Ausrichtung der Verfestigungselemente, um eine ausreichende Befestigung der Bodenmasse zu erreichen, kann auf den Stand der Technik, beispielsweise aus DE 10 2007 061 A1 und DE 44 24 212 A1, zurückgegriffen werden. Die Verfestigungs-elemente können in vorgegebenen Abständen voneinander annährend vertikal ausgerichtet in die Bodenmasse eingebracht werden.

Abhängig von der gewünschten Tiefe, in die die Verfestigungselemente reichen sollen, muss die Länge der Formteile gewählt werden. In einer Ausführungsform der Erfindung sind die Formteile längliche Formteile, deren Länge in einem Bereich von 0,5 bis 8 m liegt und deren Breite an ihrer breitesten Stelle in einem Bereich von 0,15 und 1 m liegt. Weist die Bodenmasse eine äußere Erdschicht, die die Oberfläche der Bodenmasse bildet, und eine darunter liegende Steinschicht oder einen darunter liegenden verfestigten Kern auf, so erstrecken sich die Formteile vorzugsweise von der Oberfläche der Bodenmasse bis in die Steinschicht oder den verfestigten Kern.

Die Öffnung der Formteile an der Oberfläche der Bodenmasse sorgt auch für verbesserte Drainage, da Wasser über diese Öffnung in die Formteile eintreten und so in dem Innenraum in große Tiefen gelangen kann, so dass dort die Wurzeln der Pflanze besser mit Feuchtigkeit versorgt werden können.

Die Formteile können weitere Öffnungen aufweisen, beispielsweise in ihrer Unterseite und einer Mantelseite, die die Oberseite des Formteils mit seiner Unterseite verbindet. Über diese Öffnungen kann das Wurzelwachstum beeinflusst werden, das den Wurzeln das Austreten aus dem Innenraum des Formteils in das Erdreich, das das Formteil umgibt, erleichtert. Damit kann die Richtung des Wachstums der Wurzeln gelenkt werden, was wiederum eine stärkere und vor allem tiefere Durchwurzelung der Bodenmasse zur Folge hat. Die Öffnungen im Mantel des Formteils sind zweckmäßigerweise kreisförmig, halbkreisförmig oder rechteckig mit einer oder mehreren abgerundeten Kanten. Es kann vorgesehen sein, dass alle Öffnungen im Mantel dieselbe Größe haben. An den Öffnungen können Überstände ausgebildet sein, die als Eintreibschaufeln dienen können. Die Überstände können komplementär zu den Öffnungen geformt sein. Die Eintreibschaufeln erleichtern das Eintreiben des Formteils in das Erdreich und stabilisieren dessen Lage im Erdreich.

Ist das Formteil zylinderförmig, so kann vorgesehen sein, dass an seiner Unterseite nur eine Öffnung ausgebildet ist, deren Durchmesser dem Innendurchmesser des Formteils entspricht.

An der Oberseite des Formteils können eine oder mehrere Aufnahmen für ein Eintreibwerkezeug ausgebildet sein. Diese Aufnahmen erleichtern die Einführung der Verfestigungselemente in die Bodenmasse. Alternativ oder zusätzlich können an der Unterseite des Formteils Elemente, beispielsweise eine Schneidspitze, eine Öffnung für eine Eintreibklinge oder beides, ausgebildet sein, die das Eintreiben des Formteils in die Bodenmasse vereinfachen. Dabei kann es sich beispielsweise um ein oder mehrere Schneidspitzen oder um eine Öffnung für eine Eintreibklinge handeln.

Bei den Pflanzen handelt es sich um wurzelbildende Pflanzen, insbesondere verholzende Pflanzen wie Bäume oder Sträucher. Geeignete Pflanzen sind insbesondere Pflanzen, die adventiv Wurzeln bilden. Beispiele für geeignete Pflanzenfamilien sind Salix, Populus Laburum, Ligustrum Alnus. Krautige Pflanzen, also Pflanzen, die nicht verholzen, weil sie kein sekundäres Dickenwachstum aufweisen, wie beispielsweise Gräser, sind nicht bevorzugt.

Im Sinne der vorliegenden Erfindung wird unter dem Begriff "Kunststoff" insbesondere ein Polymer verstanden. Der Begriff "Kunststoff" soll auch natürlich vorkommende Polymere wie Biopolymere umfassen. Wesentlich ist, dass der Kunststoff biologisch abbaubar und zumindest bis zum Beginn des biologischen Abbauprozesses formstabil ist.

Der biologisch abbaubare Kunststoff sollte über einen Zeitraum von mindestens zwei Jahren stabil sein, d. h. der Abbauprozess sollte frühestens zwei Jahre nach der Einbringung der Formteile in den Boden beginnen. Die Abbauprodukte des Kunststoffes werden vorzugsweise von dem Boden und/oder der Pflanze resorbiert. Der Kunststoff kann eine Zusammensetzung sein, die Zusatzstoffe enthält, beispielsweise Nährstoffe für die Pflanze. Dabei ist es möglich, die Anteile der Komponenten an der Zusammensetzung so zu wählen, dass das Wurzelwachstum erheblich gefördert wird. Die Zusatzstoffe sind Bestandteile, die in dem Kunststoffmaterial vor der Fertigung der Verfestigungselemente zugesetzt werden. Die Zusatzstoffe sind nicht der Kunststoff selbst, sondern nur in diesem enthalten.

Die Formteile können durch bekannte Verfahren hergestellt werden, beispielsweise durch Spritzguss oder Tiefziehen. Damit lassen sich sehr komplexe und belastbare Strukturen herstellen. Vorzugsweise sind die Formteile einstückige Formteile. Bei der Herstellung des Formteils können in den Kunststoff Nährstoffe für die Pflanze sowie Substanzen zur Förderung des Wurzelwachstums eingebracht werden.

Nach Maßgabe der Erfindung ist ferner ein Verfestigungselement vorgesehen, dass insbesondere zur Verwendung in dem erfindungsgemäßen Verfahren geeignet ist. Das erfindungsgemäße Verfestigungselement weist ein Formteil auf, das ganz oder teilweise aus einem biologisch abbaubaubaren, formstabilen Kunststoff besteht und das unter Ausbildung eines Innenraumes eine Oberseite, eine Unterseite und einen Mantel besitzt, der sich von der Oberseite zur Unterseite erstreckt, wobei der Innenraum zur vollständigen oder teilweisen Aufnahme einer Pflanze oder eines Pflanzenteils bestimmt ist und an der Oberseite offen ist, und an der Außenseite des Mantels Verstärkungen ausgebildet sind, die das Formteil gegen Verformungen schützen. Vorzugsweise sind an der Außenseite des Mantels Verstärkungen in Form eines wendelförmig umlaufenden Steges und Eintreibschaufeln ausgebildet. Neben dem Formteil kann das erfindungsgemäße Verfestigungselement eine Pflanze umfassen, die ganz oder teilweise in den Innenraum des Formteils eingebracht ist. Vorzugsweise enthält der Innenraum des Formteils ein nährstoffhaltiges Gemisch, das den Teil des Innenraumes, der nicht von der Pflanze eingenommen wird, vollständig ausfüllt.

Im Mantel des Formteils können Öffnungen ausgebildet sein, die den Durchtritt von Wurzeln aus dem Innenraum gestatten. Ferner kann das Formteil an seiner Unterseite offen sein.

In einer bevorzugten Ausführungsform verjüngt sich das Formteil von der Oberseite zur Unterseite, wobei der Abstand zwischen der Unterseite und der Oberseite größer als die Ausdehnung des Formteils an seiner Oberseite ist. Das Formteil kann, abgesehen von den Verstärkungen, zylinderförmig, kugelförmig, kegelstumpfförmig, pyramidenförmig oder pyramidenstumpfförmig geformt sein. Ebenso kann der Innenraum des Formteils zylinderförmig, kugelförmig, kegelstumpfförmig, pyramidenförmig oder pyramidenstumpfförmig geformt sein.

Bei den Verstärkungen kann es sich um einen Steg handeln, der wendelförmig um den Mantel läuft. Ein solcher Steg kann zusätzlich das Eintreiben des Formteils in die Bodenmasse erleichtern. Alternativ oder zusätzlich können die Verstärkungen Stege sein, die sich von der Unterseite des Formteils in Richtung der Oberseite des Formteils erstrecken. Insbesondere an den Außenkanten des Mantels können derartige Verstärkungen vorgesehen sein. Die Verstärkungen erhöhen die Stabilität des Formteils insbesondere gegenüber von Drücken aus dem umgebenden Boden.

Weitere Merkmale, die das erfindungsgemäße Formteil aufweisen kann, sind im Zusammenhang mit dem erfindungsgemäßen Verfahren bereits beschrieben worden.

Schließlich ist nach Maßgabe der Erfindung ein Erdbauwerk vorgesehen, dass auf einem Untergrund aufsitzt und eine äußere Erdschicht, die die Oberfläche des Erdbauwerkes bildet, und eine darunter liegende Steinschicht oder einen darunter liegenden verfestigten Kern aufweist, wobei sie ferner Verfestigungselemente aufweist, die sich von der Oberfläche des Erdbauwerkes in die Steinschicht oder den verfestigten Kern erstrecken und die jeweils ein Formteil, das ganz oder teilweise aus einem biologisch abbaubaubaren, formstabilen Kunststoff gebildet ist, und eine wurzelbildende Pflanze umfassen, wobei in dem Formteil ein Innenraum ausgebildet ist, der an der Oberseite des Formteils offen ist und durch den der Hauptspross der wurzelbildenden Pflanze verläuft.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine schematische Darstellung eines Hanges, der mit Hilfe des erfindungsgemäßen Verfahrens stabilisiert worden ist;
- Fig. 2: eine Seitenansicht einer ersten Ausführungsform eines Formteils eines erfindungsgemäßen Verfestigungselementes;
- Fig. 3: eine perspektivische Darstellung der in Fig. 2 gezeigten Ausführungsform;
- Fig. 4: eine Schnittdarstellung entlang der in Fig. 2 gezeigten Schnittlinie A--A;
- Fig. 5: eine Seitenansicht einer zweiten Ausführungsform eines Formteils eines erfindungsgemäßen Verfestigungselementes;
- Fig. 6: eine perspektivische Darstellung der in Fig. 4 gezeigten Ausführungsform;
- Fig. 7: eine Draufsicht auf die in Fig. 4 gezeigten Ausführungsform;
- Fig. 8: eine Teilschnittdarstellung entlang der in Fig. 5 gezeigten Schnittlinie A-A; und
- Fig. 9: eine Schnittdarstellung einer Eintreibschaufel an einer Mantelöffnung.

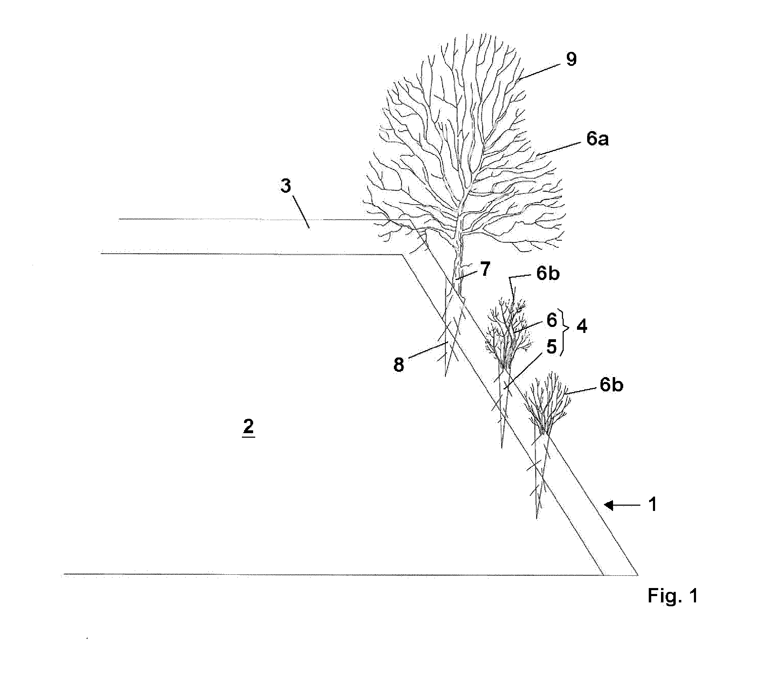

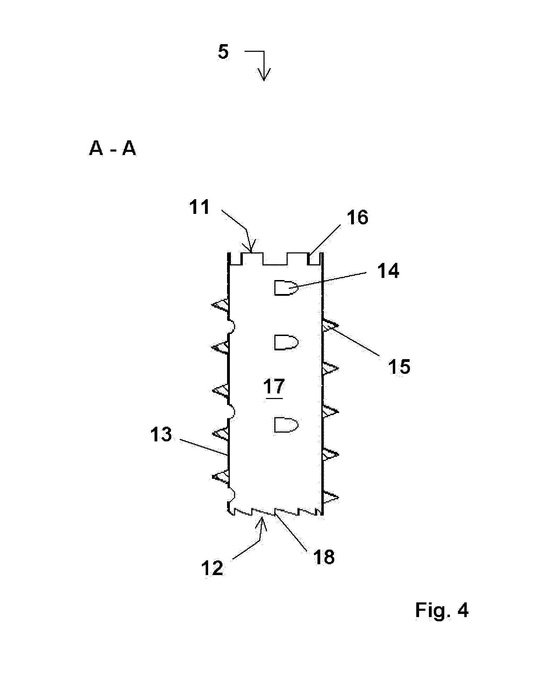

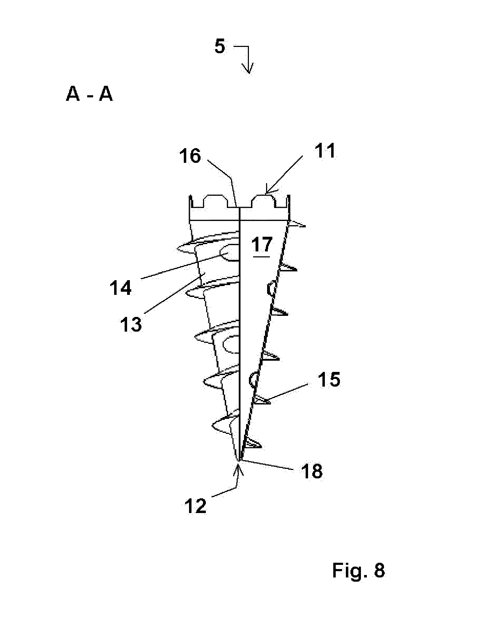

In Fig. 1 ist ein Hang 1 gezeigt, der einen innen liegenden verfestigten Kern 2, beispielsweise einen Kern aus verfestigtem Gestein oder eine verfestigte Steinschicht, und eine darauf befindliche Erdschicht 3 als Abdeckung aufweist, wobei die Erdschicht 3 die Oberfläche des Hanges 1 bildet. Bei der Erdschicht 3 kann es sich um eine Schicht handeln, die ganz oder vollständig aus Humus besteht. Zur Befestigung des Hanges 1 und insbesondere der Erdschicht 3 auf dem Kern 2 sind erfindungsgemäß Verfestigungselemente 4 vorgesehen, die jeweils ein Formteil 5 und eine Pflanze 6 umfassen. Die Verfestigungselemente 4 sind in den Hang 1 in annähernd vertikaler Ausrichtung eingebracht, wobei sie sich von der Oberfläche des Hanges 1 durch die gesamte Erdschicht 3 bis in den Kern 2 erstrecken. Das gilt sowohl für das Formteil 5 als auch die Pflanze 6, wobei der Hauptspross 7 der Pflanze 6 unterhalb der Oberfläche des Hanges 1 in einen Innenraum 17 (siehe Figuren 4 und 8) verläuft, der in dem Formteil 5 ausgebildet ist. Oberhalb der Oberfläche des Hanges 1 verläuft der Hauptspross 7 frei. Ist die Pflanze 6 ein Baum 6a, so läuft der Hauptspross 7 bis zu einer Krone 9. Ist die Pflanze ein Strauch 6b, so kann sich der Hauptspross 7 unter Ausbildung mehrerer Stämme verzweigen.

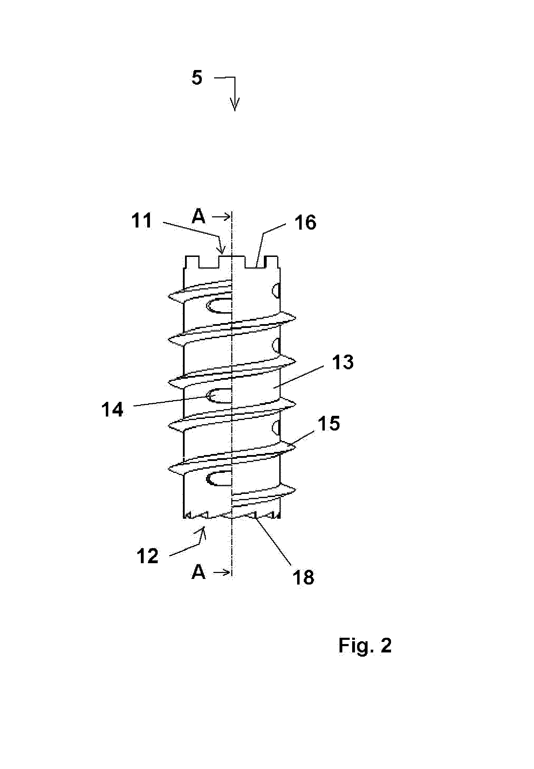

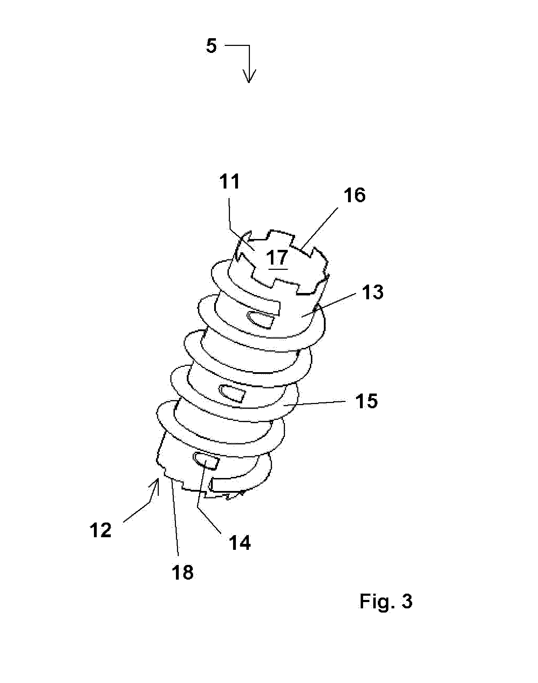

Aus Öffnungen 14 (siehe Figuren 2 bis 5), die im Mantel 13 des Formteils 5 ausgebildet sind, können die Wurzeln 8 der Pflanzen 6 austreten und den Boden durchwurzeln, und zwar sowohl innerhalb der Erdschicht 3 als auch innerhalb des Kerns 2, wobei auch Wurzeln 8 von der Erdschicht 3 in den Kern 2, von dem Kern 2 in die Erdschicht 3 eintreten können oder beides.

Im Innenraum 17 des Formteils befindet sich, wie in Fig. 1 gezeigt, der untere Teil des Hauptsprosses 7 und der Teil des Wurzelballens der Pflanze 6, abgesehen von den Wurzeln, die bereits durch Öffnungen 14 hindurch gewachsen sind. Beim Einbringen der Pflanze 6 in das Formteil 5 kann sich der gesamte Wurzelballen in dem Innenraum 17 befinden. In der Regel wird der Hauptspross 7 selbst zu diesem Zeitpunkt länger als der Innenraum 17 sein, so dass er aus dem Innenraum 17 heraussteht. Eventuelle Verzweigungen, die an dem Hauptspross 7 ausgebildet sind, sollten sich außerhalb des Innenraums 17 befinden oder in einem Bereich des Innenraumes der an die Oberseite 12 des Formteils 5 angrenzt.

An den Unterseiten 12 der Formteile 5 können Anker (nicht gezeigt) vorgesehen sein, die die Tiefenstabilität der Verfestigungselemente 4 verbessern. Die Verfestigungselemente 4 sind an dem Hang 1, bezogen auf seine Oberfläche, gleichmäßig voneinander beabstandet angeordnet.

Die Erdschicht 3 und der Kern 2 bilden die Bodenmasse des Hanges 1. Der in Fig. 1 gezeigte Hang kann ein künstliches Bodenbauwerk sein. Der Hang 1 oder der Kern 2 können alternativ ein natürliches Gebilde sein, wobei die Erdschicht 3 künstlich auf den Kern 2 aufgetragen sein kann.

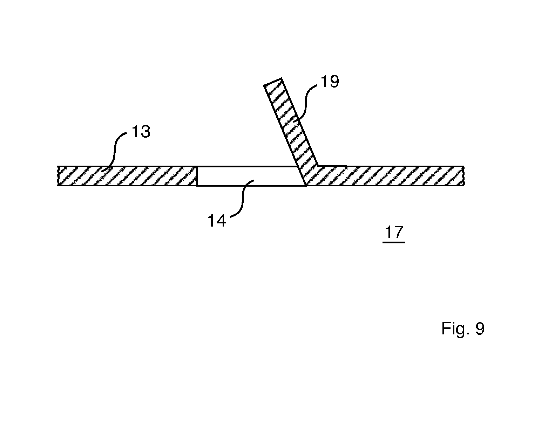

In den Figuren 2 bis 4 ist eine erste Ausführungsform eines Formteils 5 eines erfindungsgemäßen Verfestigungselementes 4 gezeigt. Das Formteil 5 weist eine Oberseite 11, eine Unterseite 12 und einen Mantel 13 auf, der die Oberseite mit der Unterseite verbindet. Oberseite 11, Unterseite 12 und Mantel 13 bilden einen Grundkörper, der zylinderförmig ist. Dabei ist die Länge des Grundkörpers, bezogen auf seine Längsachse, wesentlich größer als seine Breite, da sich das Formteil 5 in große Tiefen, d. h. Tiefen erstrecken soll, die zwischen 0,5 m und 8 m liegen. Im Mantel 13 sind Öffnungen 14 ausgebildet, die einen Wurzeldurchtritt gestatten. In der in den Figuren 2 bis 4 gezeigten Ausführungsform sind die Öffnungen 14 gleichzeitig als Eintreibschaufeln 19 (siehe Fig. 9) ausgebildet, um das Einführen des Formteils 5 in die Bodenmasse zu erleichtern. Die Eintreibschaufeln 19 sind Überstände, die an den Rand der Öffnungen 14 angrenzen und dort von der Mantelaußenseite abstehen und deren Gestalt komplementär zu den Öffnungen 14 ist. Um die Mantelaußenseite läuft eine Verstärkung in Form eines Steges 15 wendelförmig um. Dieser Steg 15 bewirkt eine Verstärkung des Formteils 5, wodurch sich seine Stabilität erhöht.

An der Oberseite 11 und an der Unterseite 12 ist das Formteil 5 offen. Die Öffnung an der Oberseite 11 ist erforderlich, damit der Hauptspross 7 der Pflanze 6 aus dem Formteil 5 an der Oberfläche des Hanges 1 austreten kann. Die Öffnung an der Unterseite 12 ermöglicht den Durchtritt von Wurzeln aus dem Innenraum 17 und den Abfluss von Wasser. Die Öffnung an der Unterseite 12 ist so dimensioniert, dass der Wurzelballen der Pflanze 6, der sich am unteren Ende ihres Hauptsprosses 7 befindet, von dem Formteil 5 in dem Innenraum 17 gehalten wird. An der Oberseite 11 sind im Mantel 13 des Formteils 5 Aufnahmen 16 ausgebildet, in die ein Eintreibwerkzeug eingreifen kann. An der Unterseite 12 sind im Mantel 13 des Formteils 5 Schneidspitzen 18 ausgebildet, die das Einführen des Formteils 5 in die Bodenmasse erleichtern.

In Fig. 4 ist zu erkennen, dass der Innenraum 17 ebenfalls zylinderförmig ist. Der Innenraum 17 ist an der Oberseite 11 und an der Unterseite 12 des Formteils 5 offen. Der Innenraum 17 wird von dem Mantel 13 begrenzt, in den die Öffnungen 14 eingebracht sind.

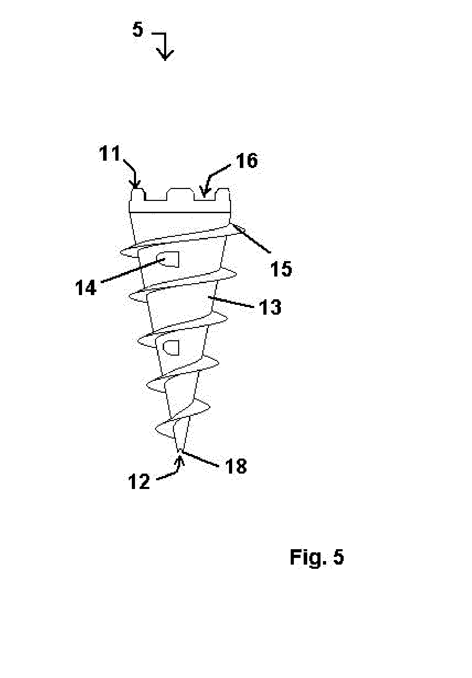

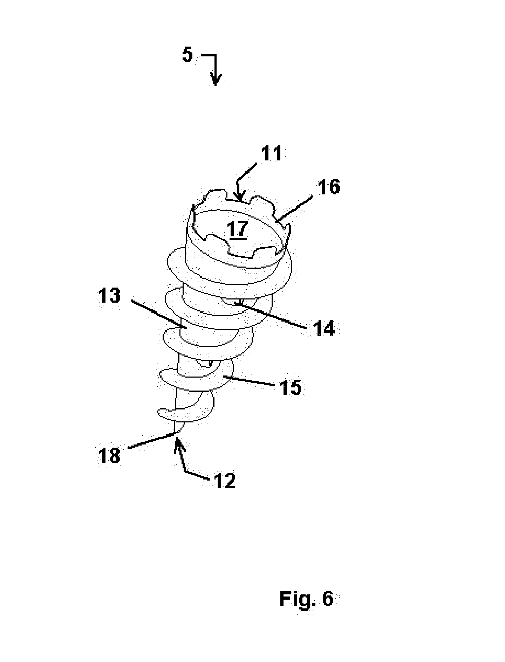

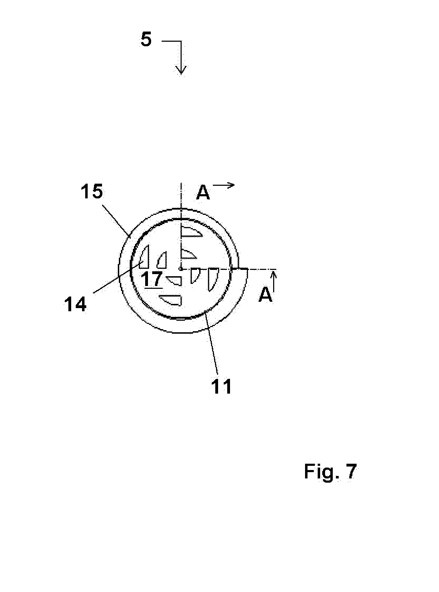

Die in den Figuren 5 bis 8 gezeigte zweite Ausführungsform des Formteils 5 des Verfestigungselementes 4 entspricht der in den Figuren 2 bis 4 gezeigten ersten Ausführungsform, außer dass der Grundkörpers des Formteils 5 und sein Innenraum 17 jeweils kegelförmig ist und dass an der Unterseite 12 des Formteils 5 eine Schneidspitze 18 und eine Öffnung zur Aufnahme einer Eintreibklinge vorgesehen sind. Auch in der zweiten Ausführungsform können an den Öffnungen 14 Eintreibschaufeln 19 vorgesehen sein.

### Bezugszeichenliste

- 1: Hang
- 2: Kern
- 3: Erdschicht
- 4: Verfestigungselement
- 5: Formteil
- 6: Pflanze
- 6a: Baum
- 6b: Strauch
- 7: Hauptspross
- 8: Wurzel
- 9: Krone

- 11: Oberseite
- 12: Unterseite
- 13: Mantel
- 14: Öffnung
- 15: Steg
- 16: Aufnahme
- 17: Innenraum
- 18: Schneidspitze
- 19: Eintreibschaufel

## Patentansprüche

1. Verfestigungselement zur Erhöhung der Stabilität von natürlich anstehenden oder geschütteten Bodenmassen, wobei das Verfestigungselement (4) ein Formteil (5) aufweist, das ganz oder teilweise aus einem biologisch abbaubaubaren, formstabilen Kunststoff besteht und unter Ausbildung eines Innenraumes (17) eine Oberseite (11), eine Unterseite (12) und einen Mantel (13) aufweist, der sich von der Oberseite (11) zur Unterseite (12) erstreckt, wobei der Innenraum (17) zur vollständigen oder teilweisen Aufnahme einer wurzelbildenden Pflanze (6) bestimmt ist und an der Oberseite (11) offen ist, **dadurch gekennzeichnet, dass** an der Außenseite des Mantels (13) Verstärkungen (15) in Form eines wendelförmig umlaufenden Steges, die das Formteil (5) gegen Verformungen schützen, und Eintreibschaufeln (19) ausgebildet sind.

2. Verfestigungselement nach Anspruch 1, **dadurch gekennzeichnet, dass** es neben dem Formteil (5) eine Pflanze (6) umfasst, die ganz oder teilweise in den Innenraum (17) des Formteils (5) eingebracht ist.

3. Verfestigungselement nach Anspruch 1 oder Anspruch 2, **dadurch gekennzeichnet, dass** der Innenraum (17) des Formteils (5) ein nährstoffhaltiges Gemisch enthält, das den Teil des Innenraumes (17), der nicht von der Pflanze (6) eingenommen wird, vollständig ausfüllt.

4. Verfestigungselement nach einem der vorstehenden Ansprüche, **dadurch gekennzeichnet, dass** im Mantel (13) des Formteils (5) Öffnungen (14) ausgebildet sind, die den Durchtritt von Wurzeln (8) aus dem Innenraum (17) gestatten.

5. Verfestigungselement nach einem der vorstehenden Ansprüche, **dadurch gekennzeichnet, dass** sich das Formteil (5) von der Oberseite (11) zur Unterseite (12) verjüngt und der Abstand zwischen der Unterseite (12) und der Oberseite (11) größer als die Ausdehnung des Formteils (5) an seiner Oberseite (11) ist.

6. Verfestigungselement nach einem der vorstehenden Ansprüche, **dadurch gekennzeichnet, dass** die Verstärkungen (15) ferner Stege umfassen, die sich von der Unterseite (12) des Formteils (5) in Richtung der Oberseite (11) des Formteils (5) erstrecken.

7. Verfestigungselement nach einem der vorstehenden Ansprüche, **dadurch gekennzeichnet, dass** das Formteil (5) an seiner Unterseite (12) offen ist.

8. Verfestigungselement nach einem der vorstehenden Ansprüche, **dadurch gekennzeichnet, dass** in den Kunststoff Nährstoffe für die Pflanze (6) eingebracht sind.

9. Verfahren zur Erhöhung der Stabilität von natürlich anstehenden oder geschütteten Bodenmassen, die durch Einführung von Verfestigungselementen (4) gemäß einem der Ansprüche 1 bis 8, die sich in große Tiefen erstrecken, an einer Lageveränderung gehindert werden, **dadurch gekennzeichnet, dass** die Verfestigungselemente (4) jeweils ein Formteil (5), das ganz oder teilweise aus einem biologisch abbaubaubaren, formstabilen Kunststoff gebildet ist und das sich von der Oberfläche der Bodenmassen in die großen Tiefen erstreckt, und eine wurzelbildende Pflanze (6) umfassen, wobei in dem Formteil (5) ein Innenraum (17) ausgebildet ist, der an der Oberseite (11) des Formteils (5) offen ist und durch den der Hauptspross (7) der wurzelbildenden Pflanze (6) verläuft.

10. Verfahren nach Anspruch 9, **dadurch gekennzeichnet, dass** die Verfestigungselemente (4) in vorgegebenen Abständen voneinander annährend vertikal ausgerichtet in die Bodenmasse eingebracht werden.

11. Verfahren nach Anspruch 9 oder Anspruch 10, **dadurch gekennzeichnet, dass** der Abbauprozess des Kunststoffes des Formteils (5) proportional zur Durchwurzelung der Bodenmasse durch Ausbildung von Wurzeln (8), die, von dem Hauptspross (7) der wurzelbildenden Pflanzen (6) ausgehend, sich von dem Innenraum (17) des Formteils (5) in die Bodenmassen erstrecken, verläuft.

12. Verfahren nach einem der Ansprüche 9 bis 11, **dadurch gekennzeichnet, dass** die Bodenmasse eine äußere Erdschicht (3), die die Oberfläche der Bodenmasse bildet, und eine darunter liegende Steinschicht oder einen darunter liegenden verfestigten Kern (2) aufweist, wobei sich die Formteile (5) in die Steinschicht oder den verfestigten Kern (2) erstrecken.

13. Erdbauwerk, dass auf einem Untergrund aufsitzt und eine äußere Erdschicht (3), die die Oberfläche des Erdbauwerkes bildet, und eine darunter liegende Steinschicht oder einen verfestigten Kern (2) aufweist, wobei sie ferner Verfestigungselemente (4) gemäß einem der Ansprüche 1 bis 8 aufweist, die sich von der Oberfläche des Erdbauwerkes (1) in die Steinschicht oder den verfestigten Kern (2) erstrecken und die jeweils ein Formteil (5), das ganz oder teilweise aus einem biologisch abbaubaubaren, formstabilen Kunststoff gebildet ist, und eine wurzelbildende Pflanze (6) umfassen, wobei in dem Formteil (5) ein Innenraum (17) ausgebildet ist, der an der Oberseite (11) des Formteils (5) offen ist und durch den der Hauptspross (7) der wurzelbildenden Pflanze (6) verläuft.

## Claims

1. A solidification element for increasing the stability of naturally occurring or dumped soil masses, wherein the solidification element (4) has a molded part (5) that completely or partially consists of a biodegradable dimensional stable plastic and has an upper surface (11), a lower surface (12), and a jacket (13) to form an inner space (17) extending from the upper surface (11) to the lower surface (12), wherein the inner space (17) is provided to completely or partially receive a rhizogenic plant (6) and is open at the upper surface (11), **characterized in that** reinforcements (15) in the form of a helically surrounding land that protect the molded part (5) from deformations, and drive-in blades (19) are formed on the outside of the jacket (13).

2. The solidification element according to claim 1, **characterized in that** in addition to the molded part (5) it comprises a plant (6) that is completely or partially introduced into the inner space (17) of the molded part (5).

3. The solidification element according to claim 1 or claim 2, **characterized in that** the inner space (17) of the molded part (5) contains a nutrient-containing mixture that completely fills the part of the inner space (17) that is not occupied by the plant (6).

4. The solidification element according to any of the preceding claims, **characterized in that** in the jacket (13) of the molded part (5) openings (14) are formed that allow passage of roots (8) from the inner space (17).

5. The solidification element according to any of the preceding claims, **characterized in that** the molded part (5) tapers from the upper surface (11) to the lower surface (12) and the distance between the lower surface (12) and the upper surface (11) is greater than the extent of the molded part (5) at its upper surface (11).

6. The solidification element according to any of the preceding claims, **characterized in that** the reinforcements (15) further comprise lands extending from the lower surface (12) of the molded part (5) toward the upper surface (11) of the molded part (5).

7. The solidification element according to any of the preceding claims, **characterized in that** the molded part (5) is open at its lower surface (12).

8. The solidification element according to any of the preceding claims, **characterized in that** nutrients for the plant (6) are introduced into the plastic.

9. A method for increasing the stability of naturally occurring or dumped soil masses that are hindered from a change in position by the introduction of solidification elements (4) according to one of claims 1 to 8 that extend to great depths, **characterized in that** the solidification elements (4) each comprise a molded part (5) that is completely or partially formed of a biodegradable, dimensional stable plastic and that extends from the surface of the soil masses into the great depths, and a rhizogenic plant (6), wherein in the molded part (5) an inner space (17) is formed that is open at the upper surface (11) of the molded part (5) and through which the main shoot (7) of the rhizogenic plant (6) extends.

10. The method according to claim 9, **characterized in that** the solidification elements (4) are introduced into the soil mass in predetermined intervals in an approximately vertically oriented manner.

11. The method according to claim 9 or claim 10, **characterized in that** the degradation process of the plastic of the molded part (5) is proportional to the rooting of the soil mass by the formation of roots (8) that extend from the inner space (17) of the molded part (5) into the soil mass starting from the main shoot (7) of the rhizogenic plant (6).

12. The method according to any one of claims 9 to 11, **characterized in that** the soil mass has an outer soil layer (3) forming the surface of the soil mass and an underlying layer of stones or an underlying solidified core (2), wherein the molded parts (5) extend into the layer of stones or the solidified core (2).

13. A soil construction that rests on a bedrock and has an outer soil layer (3) forming the surface of the soil construction and an underlying layer of stones or a solidified core (2), wherein it further has the solidification elements (4) according to one of claims 1 to 8 that extend from the surface of the soil construction (1) into the layer of stones or the solidified core (2) and each comprise a molded part (5) that is completely or partially formed of a biodegradable, dimensional stable plastic and a rhizogenic plant (6), wherein in the molded part (5) an inner space (17) is formed that is open at the upper surface (11) of the molded part (5) and through which the main shoot (7) of the rhizogenic plant (6) extends.

## Revendications

1. Elément de renforcement pour augmenter la stabilité de masses de sol naturelles ou déversées, l'élément de renforcement (4) présentant une pièce formée (5) composée entièrement ou partiellement d'un plastique biodégradable, à forme stable et avec formation d'un espace intérieur (17), présentant une partie supérieure (11), une partie inférieure (12) et une gaine (13) qui s'étend de la partie supérieure (11) à la partie inférieure (12), l'espace intérieur (17) étant conçu pour loger complètement ou partiellement une plante formant des racines (6) et étant ouverte à la partie supérieure (11), **caractérisé en ce que** à la face extérieure de la gaine (13) sont formés des consolidations (15) sous la forme d'une pièce circonférentielle hélicoïdale qui protègent la pièce formée (5) contre la déformation et des pattes d'enfoncement (19).

2. Elément de renforcement selon la revendication 1 **caractérisé en ce que** outre la pièce formée (5), il englobe une plante (6) qui est placée intégralement ou partiellement dans l'espace intérieur (17) de la pièce formée (5).

3. Elément de renforcement selon la revendication 1 ou 2 **caractérisé en ce que** l'espace intérieur (17) de la pièce formée (5) contient un mélange à substances nutritives qui remplit complètement la partie de l'espace intérieur (17) qui n'est pas occupée par la plante (6).

4. Elément de renforcement selon l'une des revendications précédentes **caractérisé en ce que** dans la gaine (13) de la pièce formée (5) sont formées des ouvertures (14) permettant aux racines (8) de sortir de l'espace intérieur (17).

5. Elément de renforcement selon l'une des revendications précédentes **caractérisé en ce que** la pièce formée (5) s'amincit de la partie supérieure (11) à la partie inférieure (12) et que la distance entre la partie inférieure (12) et la partie supérieure (11) est supérieure à la dimension de la pièce formée (5) à sa partie supérieure (11).

6. Elément de renforcement selon l'une des revendications précédentes **caractérisé en ce que** les renforcements (15) comprennent en plus des traverses qui s'étendent de la partie inférieure (12) de la pièce formée (5) vers la partie supérieure (11) de la pièce formée (5).

7. Elément de renforcement selon l'une des revendications précédentes **caractérisé en ce que** la pièce formée (5) est ouverte à sa partie inférieure (12).

8. Elément de renforcement selon l'une des revendications précédentes **caractérisé en ce que** des substances nutritives pour la plante (6) sont introduites dans le plastique.

9. Procédé pour augmenter la stabilité de masses de sol naturelles ou déversées dont la modification de position est empêchée par introduction d'éléments de renforcement (4) selon l'une des revendications 1 à 8 qui s'étendent en grandes profondeurs **caractérisé en ce que** les éléments de renforcement (4) englobent respectivement une pièce formée (5) qui est formée entièrement ou partiellement à partir d'un plastique biodégradable à forme stable et qui s'étend de la surface de la masse du sol vers les grandes profondeurs et une plante formant des racines (6), dans la pièce formée (5) étant formé un espace intérieur (17) qui est ouvert à la partie supérieure (11) de la pièce formée (5) et par laquelle la pousse principale (7) de la plante (6) formant les racines passe.

10. Procédé selon la revendication 9 **caractérisé en ce que** les éléments de consolidation (4) sont installés à distances prévues l'un de l'autre approximativement verticalement dans la masse du sol.

11. Procédé selon la revendication 9 ou 10 **caractérisé en ce que** le processus de dégradation du plastique de la pièce formée (5) s'effectue proportionnellement par rapport à l'enracinement de la masse du sol par formation de racines (8) qui, partant de la pousse (7) de la plante formant des racines (6), s'étendent de l'espace intérieur (17) de la pièce formée (5) dans la masse du sol.

12. Procédé selon l'une des revendications 9 à 11 **caractérisé en ce que** la masse du sol présentant une couche de terre extérieure (3) qui forme la surface de la masse du sol et une couche de pierres sous-jacente ou un noyau (2) renforcé sous-jacent, les pièces formées (5) s'étendant dans la couche de pierres ou dans le noyau (2) renforcé.

13. Structure de sol qui est posée sur un fond et qui présente une couche de terre (3) extérieure formant la surface de la structure de sol et une couche de pierre sous-jacente ou un noyau (2) sous-jacent, présentant de plus des éléments de renforcement (4) selon l'une des revendications 1 à 8 qui s'étendent de la surface de la structure de sol (1) dans la couche de pierres ou dans le noyau (2) renforcé et qui englobent respectivement une pièce formée (5) qui est formée entièrement ou partiellement à partir d'un plastique biodégradable à forme stable et une plante formant des racines (6), dans la pièce formée (5) étant formé un espace intérieur (17) qui est ouvert à la partie supérieure (11) de la pièce formée (5) et par laquelle la pousse principale (7) de la plante formant les racines (6) passe.
